# EUROPEAN PATENT APPLICATION

(11) **EP 4 155 684 A2**
(43) Date of publication of application: **29.03.2023**
(21) Application number: 22195677.4
(22) Date of filing: 14.09.2022
(51) Int. Cl.: G01C 21/36

(54) **METHOD AND APPARATUS FOR NAVIGATING VEHICLE, ELECTRONIC DEVICE, AND STORAGE MEDIUM**

(30) Priority: 26.09.2021 CN 202111131957
(71) Applicant: Apollo Intelligent Connectivity (Beijing) Technology Co., Ltd., Beijing 102600 (CN)
(72) Inventor: HONG, Suzhen, Beijing, 102600 (CN)
(74) Representative: Nederlandsch Octrooibureau

(57) **Abstract**

Provided are method and apparatus for navigating a vehicle, an electronic device, and a storage medium, and relates to the field of computers, in particular to the field of Internet of vehicles, automatic driving, and intelligent cabins. A specific implementation solution is as follows: in response to a target vehicle being driving to a target location, weather information of an environment where the target vehicle is located is detected. On the basis of the weather information, a weather level of the environment is determined. In response to the weather level being higher than a target weather level, the at least one candidate parking area is acquired. And a target parking area is determined from the at least one candidate parking area, and on the basis of the target parking area, a navigation route of the target vehicle is determined.

## Description

### Technical Field

The present disclosure relates to the field of computers, in particular to a method and apparatus for navigating a vehicle, an electronic device, and a storage medium in the field of Internet of vehicles, automatic driving, and intelligent cabins.

### Background

At present, in vehicle navigation, location information of parking lots within a certain area range a may be provided to a user.

However, in the above method, usually, after a vehicle has reached a certain area range of a destination, parking lots are recommended to the user according to conventional factors such as a distance between the user and a parking lot, a distance between the destination and the parking lot, a duration calculated on the basis of a traffic jam indicator, and saturation data of the current parking lot, instead of reasonably recommending parking lots to the user in combination with a weather level in response to the vehicle being driving to the destination.

### Summary

The present disclosure provides a method and apparatus for navigating a vehicle, an electronic device, and a storage medium.

According to one aspect of the present disclosure, a method for navigating a vehicle is provided. The method may includes: in response to a target vehicle being driving to a target location, weather information of an environment where the target vehicle is located is detected; on the basis of the weather information, a weather level of the environment is determined, wherein the weather level is used for indicating a weather badness of the environment where the target vehicle is located; in response to the weather level being higher than a target weather level, acquiring at least one candidate parking area, the at least one candidate parking area matching with the target weather level, and each of the at least one candidate parking area is used for indicating an area where the target vehicle is allowed to be parked; and determining a target parking area from the at least one candidate parking area, and determining, on the basis of the target parking area, a navigation route of the target vehicle.

According to another aspect of the present disclosure, an apparatus for navigating a vehicle is further provided. The apparatus may include: a detection component, configured to, in response to a target vehicle being driving to a target location, detect weather information of an environment where the target vehicle is located; a first determination component, configured to determine, on the basis of the weather information, a weather level of the environment, wherein the weather level is used for indicating a weather badness of the environment where the target vehicle is located; an acquisition component, configured to acquire at least one candidate parking area, in response to the weather level being higher than a target weather level, wherein the at least one candidate parking area matches with the target weather level, and each of the at least one candidate parking area is used for indicating an area where the target vehicle is allowed to be parked; and a second determination component, configured to determine a target parking area from the at least one candidate parking area, and determine, on the basis of the target parking area, a navigation route of the target vehicle.

According to another aspect of the present disclosure, an electronic device is further provided. The electronic device may include at least one processor; and a memory in communication connection with the at least one processor, wherein the memory stores instructions which can be executed by the at least one processor, and the instructions are executed by the at least one processor, so that the at least one processor to implement the method for navigating a vehicle according to the embodiment of the present disclosure.

According to another aspect of the present disclosure, a non- transitory computer-readable storage medium, having computer instructions stored therein is provided, wherein the computer instructions are used for enabling a computer to implement the method for navigating a vehicle according to the embodiment of the present disclosure.

According to another aspect of the present disclosure, a computer program product is further provided The computer program product may include a computer program which, when executed by a processor, implements the method for navigating a vehicle according to the embodiment of the present disclosure.

According to another aspect of the present disclosure, a vehicle is further provided. The vehicle may include the apparatus for navigating a vehicle according to the embodiment of the present disclosure or the electronic device according to the embodiment of the present disclosure.

It should be understood that contents as described in this section is neither intended to identify key or important features of the embodiments of the present disclosure, nor to limit the scope of the present disclosure. Other features of the present disclosure will become readily understood from the following specification.

### Brief Description of the Drawings

The accompanying drawings are used for better understanding of the present disclosure, and do not constitute a limitation to the present disclosure.
Fig. 1 is a flow chart of a method for determining a running trajectory of a vehicle according to an embodiment of the present disclosure;
Fig. 2 is a schematic diagram of pushing according to distances during searching of parking lots nearby according to the related technology;
Fig. 3 is a flow chart of a method for actively recommending a proper parking lot after a vehicle reaches a target location according to an embodiment of the present disclosure;
Fig. 4 is a schematic diagram of an interface of pushing parking lots according to an embodiment of the present disclosure;
Fig. 5 is a flow chart of a method for actively recommending a proper parking lot in a navigation process of the vehicle according to an embodiment of the present disclosure;
Fig. 6 is a schematic diagram of an apparatus for navigating a vehicle according to an embodiment of the present disclosure; and
Fig. 7 is a schematic block diagram of an electronic device according to an embodiment of the present disclosure.

### Detailed Description of the Embodiments

Hereinafter, exemplary embodiments of the present disclosure are described below with reference to the accompanying drawings, which include various details of the embodiments of the present disclosure to facilitate understanding and should be considered as exemplary only. Accordingly, those of ordinary skill in the art would recognize that various changes and modifications of embodiments described herein can be made without departing from a scope and spirit of the present disclosure. Also, descriptions of well-known functions and structures are omitted from the following description for clarity and conciseness.

An embodiment of the present disclosure provides a method for determining a running trajectory of a vehicle.

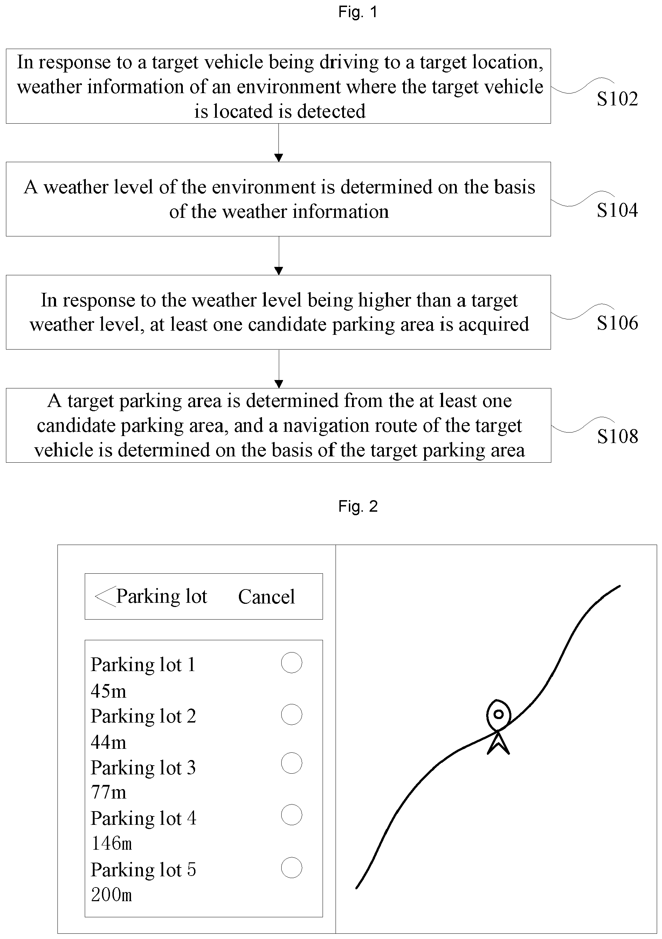

Fig. 1 is a flow chart of a method for determining a running trajectory of a vehicle according to an embodiment of the present disclosure. As shown in Fig. 1, the method may include the following steps.

At step S102, in response to a target vehicle being driving to a target location, weather information of an environment where the target vehicle is located is detected.

In the technical solution provided at step 102 of the present disclosure, the target location is a destination that the target vehicle requires to reach, and a navigation function of a navigation system of the target vehicle can be activated to acquire the target location. For example, a user (for example, a vehicle owner or a driver) triggers an input operation instruction on a graphical user interface, and in response to the input operation instruction, the above target location can be input, so that the navigation system can implement navigation for the target location. The graphical user interface may be a map navigation interface of a central control screen of an intelligent network connection system, or may be a central control navigation interface.

A process that the target vehicle drives to the target location in this embodiment may include: the target vehicle drives to a vicinity of the target location, and may also include a navigation process before the target vehicle drives to the vicinity of the target location.

In response to the target vehicle being driving to the target location, the weather information of the environment where the target vehicle is located is detected. The weather information may include weather parameters which may be parameters used for indicating weather conditions, for example, used for measuring the badness of the weather. The parameters may include, but are not limited to, rainfall, hail, dust level, wind speed, etc. Optionally, in this embodiment, the weather information may be detected through an information sensing system and/or an image recognition technology. For example, the wind speed, etc. may be detected by the information sensing system, and the rainfall, hail, sand, dust levels, etc. may be recognized by the image recognition technology. The information sensing system can be a visual sensing system, and the image recognition technology is carried out by using an image recognizer. Weather images can be collected by an image acquisition device. For example, the image acquisition device may be a camera, for example, the camera may be a parking space camera.

Optionally, in this embodiment, detecting the weather information of the environment where the target vehicle is located is detected may be that the weather information of a current position range where the target vehicle is in is detected. In this embodiment, the current position range where the target vehicle is in may be acquired by a positioning technology, and the weather information of the current position range is detected. The positioning technology is used for positioning, and may be a Global Positioning System (GPS).

At step S104, a weather level of the environment is determined on the basis of the weather information.

In the technical solution provided at above step 104 of the present disclosure, after the weather information of the environment where the target vehicle is located is detected, the weather level of the environment is determined on the basis of the weather information. The weather level is used for indicating the badness of the weather of the environment where the target vehicle is located.

In this embodiment, the weather level of the environment where the target vehicle is located may be determined on the basis of the weather information, and an information processor may be used for determining the weather level on the basis of the weather information through an information processing technology. Optionally, in this embodiment, a target model indicating a mapping relationship between the weather information and the weather level may be pre-established. In this way, the weather information may be input into the target model for processing, thereby the weather level is output. The weather level may be used for representing a condition of the environment where the target vehicle is located, for example, used for indicating the badness of the weather. Optionally, a higher weather level indicates higher badness of the weather in the environment where the target vehicle is located, and a lower weather level indicates lower badness of the weather in the environment where the target vehicle is in.

At step S106, in response to the weather level being higher than a target weather level, at least one candidate parking area is acquired.

In the technical solution provided at above step 106 of the present disclosure, after the weather level of the environment is determined on the basis of the weather information, in response to the weather level being higher than the target weather level, at least one candidate parking area is acquired, wherein the at least one candidate parking area matches with the target weather level, and each of the at least one candidate parking areas represents an area where the target vehicle is allowed to be parked.

In this embodiment, it can be determined whether the weather level is higher than a preset target weather level. The target weather level is a preset trigger level, which can be a critical threshold for measuring that the weather level reaches a certain degree of badness. The critical threshold may be a rainfall threshold, a dust level threshold, and the like, and no specific limitation is made here. Optionally, the target vehicle of this embodiment may include a vehicle visual sensing system, and whether the weather level is higher than the target weather level may be sensed by the vehicle visual sensing system. In response to the weather level being higher than the target weather level, it can be determined that the weather of the environment where the target vehicle is located conforms to a preset bad weather, and the at least one candidate parking area may be acquired. The at least one candidate parking area is pushed for the target weather level and indicates that the target vehicle is allowed to be parked, for example, a parking lot suitable for parking the target vehicle under the above weather level, which can be an underground parking lot. In this embodiment, the at least one candidate parking area may be displayed on the graphical user interface.

Optionally, in response to the weather level being not higher than the target weather level, the target vehicle may continue to be navigated according to an original navigation route, and the weather level of the environment where the target vehicle is located may continue to be monitored.

Optionally, the above method of this embodiment may be a push model, for example, a parking lot model, an input of which may be the weather information of the environment where the target vehicle is located, and an output of which may be the at least one candidate area.

At step S108, a target parking area is determined from the at least one candidate parking area, and a navigation route of the target vehicle is determined on the basis of the target parking area.

In the technical solution provided at above step 108 of the present disclosure, after the at least one candidate parking area is acquired, a target parking area may be determined from the at least one candidate parking area, and a navigation route of the target vehicle may be determined on the basis of the target parking area.

In this embodiment, the at least one candidate parking area is an area suitable for parking the target vehicle under the above weather level, and may be displayed on the graphical user interface to facilitate selection of the user according to own needs. Optionally, the user triggers a selection operation instruction on the graphical user interface, and in response to the selection operation instruction, the target parking area may be quickly determined from the at least one candidate parking area. After the target parking area is determined from the at least one candidate parking area, the navigation route of the target vehicle may be determined on the basis of the target parking area. The navigation route may guide the target vehicle to drive to the above target parking area, thereby safety, comfort, and hygiene of parking of the target vehicle are ensured.

Through above step S 102 to step S108 of the present application, in response to the target vehicle being driving to the target location, weather information of the environment where the target vehicle is located is detected; the weather level of the environment is determined on the basis of the weather information, wherein the weather level is used for indicating a weather badness of the environment where the target vehicle is located; in response to the weather level being higher than the target weather level, the at least one candidate parking area is acquired, wherein the at least one candidate parking area matches with the target weather level, and each of the at least one candidate parking area is used for indicating the area where the target vehicle is allowed to be parked; and the target parking area is determined from the at least one candidate parking area, and a navigation route of the target vehicle is determined on the basis of the target parking area.

That is to say, in this embodiment, in response to the target vehicle being driving to the target location, the at least one candidate parking area for the target weather level may be acquired on the basis of that the weather level detected reaching the target weather level, and the target area is selected from the at least one candidate parking area to determine the navigation route of the target vehicle, so that the target area may be navigated according to the navigation route, which ensures that an appropriate target area can be conveniently selected for the target vehicle when the weather level reaches the target weather level, the safety, the comfort and the hygiene of the parking of the target vehicle are ensured, and the technical effect of the efficiency of navigating the parking area of the vehicle is achieved, and the technical problem of low efficiency of navigating the parking area of the vehicle is solved.

The above method of this embodiment will be further described below.

As an optional implementation, in response to the weather level being higher than the target weather level, the method further includes the following step: voice prompt information is output, wherein the voice prompt information is used for prompting whether the at least one candidate parking area is allowed to be pushed.

In this embodiment, in response to the weather level being higher than the target weather level, a target instruction may be triggered to a recommendation engine, and the target instruction may be used for controlling the recommendation engine to output voice prompt information by using a recommendation engine technology. For example, the voice prompt information is broadcast by a vehicle-mounted speaker. The voice prompt information may be used for asking the user whether the at least one candidate parking area is allowed to be pushed. The at least one candidate parking area may be an underground parking lot. For example, the above voice prompt information may be whether to choose the underground parking lot first, so that the problem that the user needs to keep eyes on the graphical user interface all the time is avoided.

As an optional implementation, step S106 that at the least one candidate parking area is acquired includes the following step: in response to the at least one candidate parking area being allowed to be pushed, the at least one candidate parking area is acquired according to a target priority, wherein a degree to which the candidate parking area with a high target priority suitable for parking the target vehicle is greater than a degree to which the candidate parking area with a low target priority suitable for parking the target vehicle.

In this embodiment, the target vehicle may include a voice interaction system, and voice information of the user may be received through a voice interaction technology, so as to achieve a purpose of voice interaction between the target vehicle and the user. Optionally, after the voice prompt information is output, the voice information of the user that allow to push the at least one candidate parking area may be received. At this time, the at least one candidate parking area may be acquired according to the target priority. The at least one candidate parking area with the target priority is determined by the target weather level, wherein a higher target priority indicates a larger degree to which the corresponding candidate parking area is suitable for parking the target vehicle, and a lower target priority indicates a smaller degree to which the corresponding candidate parking area is suitable for parking the target vehicle, so that in this embodiment, the cognitive and operational burdens of the user are relieved through the voice interaction, which is more thoughtful and efficient; and use experience of navigation of the user is enhanced.

As an optional implementation, in the at least one candidate parking area, the target priority of the candidate parking area underground is higher than that of the candidate parking area overground.

In this embodiment, when the weather level of the environment where the target vehicle is located is higher than the target weather level, in order to ensure the safety, the comfort and the hygiene of the parking for the target vehicle, the target priority of the candidate parking area underground is higher than that of the candidate parking area overground. That is to say, the candidate parking area underground is more suitable for parking the target vehicle, and the at least one candidate parking area may be displayed according to an order of the priorities from high to low, so that the user can select the target area therefrom quickly.

In this embodiment, distances between a current position of the target vehicle and each of multiple target areas, distances between the target location and each of the multiple target areas, a duration for calculating a traffic jam indicator, saturation data of the multiple target areas, and the like can be acquired to calculate a priority list of the multiple target areas, wherein the multiple target areas may include an overground parking area, a roadside parking area, and an underground parking area. In this embodiment, the at least one candidate parking area may be determined from multiple areas with a priority greater than a certain priority in combination with the target weather level. Optionally, in this embodiment, the at least one candidate parking area that matches with the target weather level is acquired according to the target priority. For example, a priority of an underground parking lot within a target range is better than a priority of an open-air parking lot such as overground parking lot and road parking lot, and the at least one candidate parking area may include the underground parking lot within the target range. The priority of the underground parking lot beyond the target range is lower than that of the open-air parking lot within the target range, but higher than that of the open-air parking lot such as the overground parking lot and the road parking lot beyond the target range, and the at least one candidate parking area may include the underground parking lot beyond the target range. The above target range may be a range of 500 meters based on a current position of the target vehicle, which is not specifically limited here.

For example, the target vehicle is within 500 meters from the target location, and other push conditions are the same, and the push priority of the underground parking lot is higher than that of the overground parking lot and the road parking lot. In this embodiment, other distances other than 500 meters can also be set, which is not specifically limited here.

Optionally, it is determined that at the least one candidate parking area is not allowed to be pushed, areas where the target vehicle can be parked may be pushed according to the priories of the multiple target areas. The target areas having short distances and less time to the current position of the target vehicle in higher priority.

As an optional implementation, the method further includes the following steps: a current driving state of the target vehicle is determined; and the target weather level corresponding to the current driving state is determined.

In this embodiment, in response to the target vehicle being driving to the target location, the current driving state of the target vehicle can be determined. The current driving state can be used for indicating a driving stage in response to the target vehicle being driving to the target location, for example, a driving stage of reaching the vicinity of the target location and a driving stage in the navigation process. After the current driving state of the target vehicle is determined, the target weather level corresponding to the current driving state may be determined. That is to say, in this embodiment, the target weather level for measuring the weather level of the target vehicle may be related to the current driving state of the target vehicle.

The method of the embodiment of the present disclosure will be further introduced below in combination with a driving scenario and the weather information of this embodiment by using a scenario propulsion engine technology.

As an optional implementation, determining the current driving state of the target vehicle includes the following step: a first driving state of the target vehicle is determined, wherein the first driving state is used for indicating that the target vehicle has driven to a preset distance range from the target location; and determining the target weather level corresponding to the current driving state includes the following step: a first target weather level matching with the first driving state is determined, wherein the first target weather level is used for indicating first badness of the weather.

In this embodiment, whether the target vehicle has driven to the preset distance range from the target location can be detected. For example, whether the target vehicle has driven to a nearby area of the target location is detected by a GPS positioning technology. In response to detected that the target vehicle has driven within the preset distance range from the target location, the target vehicle is in the first driving state at this time, and the first target weather level matching with the first driving state may be determined. The first target weather level can be used for indicating the first badness of the weather, that is to say, the weather is generally bad weather, and can be a weather state that is not suitable for pedestrians to walk outdoors or affects the hygiene of vehicles, such as regular raining and mild and moderate dust. Therefore, in this embodiment, in response to the target vehicle is in the first driving state, and the weather level of the environment is greater than the first target weather level, a recommendation engine can be immediately triggered to output the voice prompt information to prompt whether the at least one candidate parking area is allowed to be pushed.

As an optional implementation, step S102 that the weather information of the environment where the target vehicle is located is detected includes the following step: in response to the target vehicle being in the first driving state, the weather information is detected.

In this embodiment, before it is determined that the current driving state of the target vehicle is the above first driving state, the weather information may not be detected first. After it is determined that the current driving state of the target vehicle is the above first driving state, the target vehicle has a parking demand, and the weather information can be detected. The weather level of the environment is determined on the basis of the weather information. In response to the weather level being higher than the first target weather level, the voice prompt information is output to prompt the user whether the at least one candidate parking area is allowed to be pushed. In response to the at least one candidate parking area being allowed to be pushed, the at least one candidate parking area is acquired, and then the target parking area is determined from the at least one candidate parking area, the navigation route of the target vehicle is determined on the basis of the target parking area, and the target vehicle is guided to the target area through the navigation route, so as to achieve a purpose that a suitable target area to facilitate the parking of the target vehicle is actively recommended after the target vehicle arrives at the vicinity of the target location.

Optionally, in response to the at least one candidate parking area being not allowed to be pushed, the priorities of the multiple target areas are calculated according to the distances between the current position and each of the multiple target areas, the distances between the target location and each of the multiple target areas, the duration (driving duration) for calculating the traffic jam indicator, the saturation data of the multiple target areas, and the like to push areas where the target vehicle can be parked.

Optionally, after it is determined that the current driving state of the target vehicle is the above first driving state, in response to the weather level being not greater than the first target weather level, the weather level of the environment where the target vehicle is located may continue to be monitored.

As an optional implementation, the current driving state of the target vehicle is determined, including the following step: a second driving state of the target vehicle is determined, wherein the second driving state is used for indicating that the target vehicle has not driven to the preset distance range from the target location; and the target weather level corresponding to the current driving state is determined includes the following step: a second target weather level matching with the second driving state is determined, wherein the second target weather level is used for indicating second badness of the weather.

In this embodiment, in response to the target vehicle having not driven to the preset distance range from the target location, the target vehicle is in the navigation process. At this time, the target vehicle is in the second driving state, and the second target weather level matching with the second driving state is determined, wherein the second target weather level can be used for indicating that the second badness of the weather is greater than the above first badness. The weather can be extremely bad weather, for example, rainfall, sand, hail, and wind level reach a certain level, so that there may be potential safety hazards for the user, and it is not suitable for parking the target vehicle in an open place. Therefore, in this embodiment, in response to the target vehicle being in the second driving state, and the weather level of the environment is greater than the second target weather level, the recommendation engine can be immediately triggered to output the voice prompt information to prompt whether the at least one candidate parking area is allowed to be pushed, which achieves a purpose that a caring service for emergency parking is actively providing for the user, and the intelligence and humanization of a vehicle-mounted system is reflected.

As an optional implementation, step S102 that the weather information of the environment where the target vehicle is located is detected includes the following step: after the target location is acquired, the weather information is detected in response to the target vehicle being in the second driving state.

In this embodiment, after the target location is input by the navigation system, the target vehicle starts to drive. The weather information can be detected all the time while the target vehicle is in the second driving state, and the weather level of the environment is determined on the basis of the weather information in real time. Once it is detected that the weather level is higher than the second target weather level, the voice prompt information is output to prompt the user whether the at least one candidate parking area is allowed to be pushed. In response to the at least one candidate parking area being allowed to be pushed, the at least one candidate parking area is acquired. The at least one area may be at least one underground parking lot. Only the at least one underground parking lot may be displayed for the user to make a decision, and the target parking area is determined therefrom. The navigation route of the target vehicle is determined on the basis of the target parking area. The target vehicle is guided to drive to the target area through the navigation route, so as to achieve a purpose that a suitable target area for the target vehicle in emergency in the navigation process of the target vehicle is actively recommended.

Optionally, in response to the at least one candidate parking area being not allowed to be pushed, the target vehicle may continue to drive according to an originally formulated navigation route of the target location.

Optionally, after it is determined that the current driving state of the target vehicle is the above second driving state, in response to the weather level being not greater than the second target weather level, the target vehicle can continue to drive according to the originally formulated navigation route of the target location.

In this embodiment, when the parking areas of the target vehicle is pushed to the user, a suitable target area is determined in combination with an actual driving scenario of the user and the weather condition, which enriches influencing factors on pushing of the target parking area, so that the pushed target area meets an actual need of the user. At the same time, in this embodiment, the cognitive and operational burdens of a vehicle owner is reduced through active recommendation and voice interaction, which is more thoughtful and efficient, and an use experience of navigation of the user is enhanced.

The above method of this embodiment will be further introduced below. Specifically, the parking area as a parking lot is taken as an example for illustration.

With popularization of intelligent vehicle-mounted navigation system and navigation system of mobile terminal, information of multiple parking lots near the target location is aquired, and on the basis of the algorithm logic, a priority list of the parking lots is determined in combination with the distance, the saturation of parking spaces, and other factors. The priority list is displayed on a map navigation interface, so that a purpose of pushing the priority list to the user is achieved.

In the related art, a navigation product can provide the user with location information of the parking lots within a certain area range around the target location of the navigation, and then the target location is recommend to the user, so that the user can go to the parking lot for parking according to the location information of the parking lot.

In the related art, a priority of recommendation of the parking lot can also be determined on the basis of a recommendation model and logic, wherein correlation factors of the recommendation model for recommending a parking lot can be a distance between the user and the parking lot, a distance between the target location and the parking lot, a duration for calculating the traffic jam indicators, saturation data of the current parking lot, etc.

It can be seen from the above that a navigation server in the related art can only acquire the distance between the user and the parking lot, the distance between the target location and the parking lot, the duration for calculating the traffic jam indicators, the saturation data of the current parking lot, and the like. These are all recommendation factors under regular weather conditions, as shown in Fig. 2. Fig. 2 is a schematic diagram of pushing according to distances during searching of parking lots nearby according to the related technology, showing parking lot 1, parking lot 2, parking lot 3, parking lot 4 and parking lot 5 according to an order of priorities for the parking lots, wherein the distance between the user and the parking lot 1 is 45 m, the distance between the user and the parking lot 2 is 44 m, the distance between the user and the parking lot 3 is 77 m, the distance between the user and the parking lot 4 is 146 m, and the distance between the user and the parking lot 5 is 200 m.

However, a need for emergency parking and parking at a destination in bad weather such as rain, hail, gale, and sandstorm is not considered intimately and practically, and influencing factors that are considered are not complete enough. Reasonable pushing is not made according to the weather conditions, and it still needs to be done manually. The user needs to keep eyes on the navigation interface and pay attention to relevant selection information.

In the related art, the parking area can also be divided into multiple parking sub-areas, and the number and location points of indoor parking lots and outdoor parking lots in any parking sub-area can be acquired, respectively. By acquiring the location point of any floating vehicle in the parking sub-areas, nearby parking lots with vacant parking spaces can be recommended for the floating vehicle after the floating vehicle reaches the navigation destination. A parking habit of a driver can be acquired by acquiring historical parking behavior information of the floating vehicle, and at least one indoor parking lot or at least one outdoor parking lot is then preferentially recommended according to the parking habit of the driver, so that the driver can quickly find a suitable parking lot. The parking area may be a certain city, or may be a certain district in the certain city, or even may be a certain large business district in the certain district.

However, in this embodiment, the scenario propulsion engine technology can be used to build a parking lot push model in combination with the weather detection method. In a certain bad weather that is not suitable for outdoor traveling, a suitable parking lot is actively pushed to the vehicle owner, and it is ensured that the vehicle owner can conveniently and quickly select a safe and comfortable parking lot in an interaction manner, which embodies the intelligence and humanization of the vehicle-mounted system. The method of this embodiment will be further described below.

Hardware of this embodiment for implementing the above method may include: a central control screen in an intelligent network connection system, an external camera, a vehicle-mounted speaker, an image recognizer, and an information processor.

Software of this embodiment for implementing the above method may include: a navigation technology for achieving navigation on the basis of an input destination; a GPS positioning technology used for achieving positioning and sensing of arrival at the vicinity of the target location; an information sensing system and an image recognition technology used for sensing rainfall, dust, hail, wind speed, and the like; an information processing technology used for determining a level of the rainfall, the dust, the hail, the wind speed, and the like in combination with preset level parameters; a recommendation engine technology and a voice interaction technology which can actively initiate to push information to the user through the voice information on the basis of a trigger condition.

In this embodiment, the method for actively recommending a suitable parking lot under a general bad weather after the target vehicle drives to the vicinity of the target location is further described below.

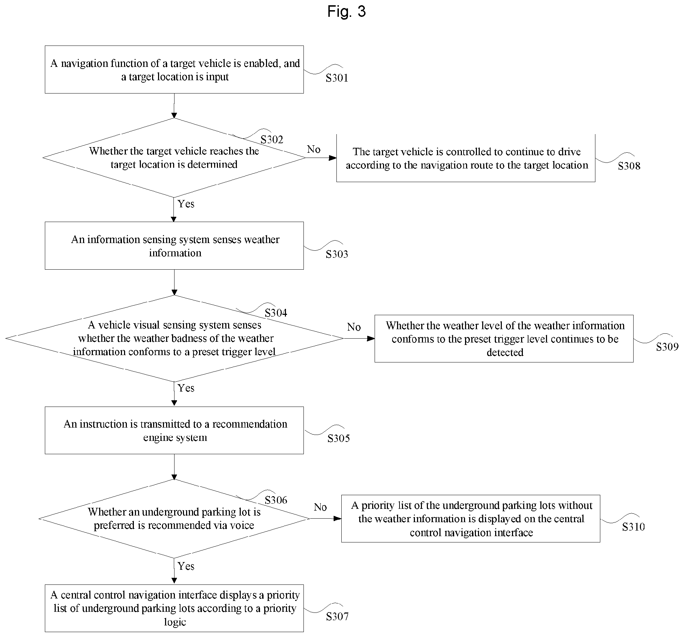

Fig. 3 is a flow chart of a method for actively recommending a proper parking lot after a vehicle reaches a target location according to an embodiment of the present disclosure. As shown in Fig. 3, the method may include the following steps.

At step S301, a navigation function of a target vehicle is enabled, and a target location is input.

At step S302, whether the target vehicle reaches the target location is determined.

At step S303, an information sensing system senses weather information.

In response to the target vehicle reaching the target location, that is, in response to a user reaches the vicinity of the target location through navigation, the weather information may be sensed through the information sensing system.

Optionally, in this embodiment, a current position of the vehicle may be acquired through the GPS positioning technology, and whether the target vehicle has reached the vicinity of the target location is determined according to the current position.

At step S304, a vehicle visual sensing system senses whether the weather badness of the weather information conforms to a preset trigger level.

In this embodiment, the preset trigger level is used for determining a trigger condition, which may be a rainfall level, a dust level, and the like.

In this embodiment, a general bad weather is defined as a weather condition that is not suitable for pedestrians to walk outdoors or affects the hygiene of vehicles, such as regular raining, mild and moderate dust. The preset trigger level of this embodiment can be used for indicating the above-mentioned general bad weather.

In this embodiment, the vehicle visual sensing system and the image recognition technology can be used for acquiring the current position and then detecting the weather condition of the current position. The weather badness level can be determined according to a value of a preset weather badness parameter in the weather condition to determine whether the weather badness level conforms to the preset trigger level.

At step S305, an instruction is transmitted to a recommendation engine system.

In response to the vehicle visual sensing system sensing the weather level of the weather information conforms to the preset trigger level (generally bad weather), the instruction is transmitted to the recommendation engine system.

At step S306, whether an underground parking lot is preferred is recommended via voice.

In response to a recommendation engine actively initiating to push voice, the user can be asked whether the underground parking is preferred.

At step S307, a central control navigation interface displays a priority list of underground parking lots according to a priority logic.

The voice recommends that the underground parking lot is preferred, and the central control navigation interface displays the priority list of the underground parking lots according to the priority logic.

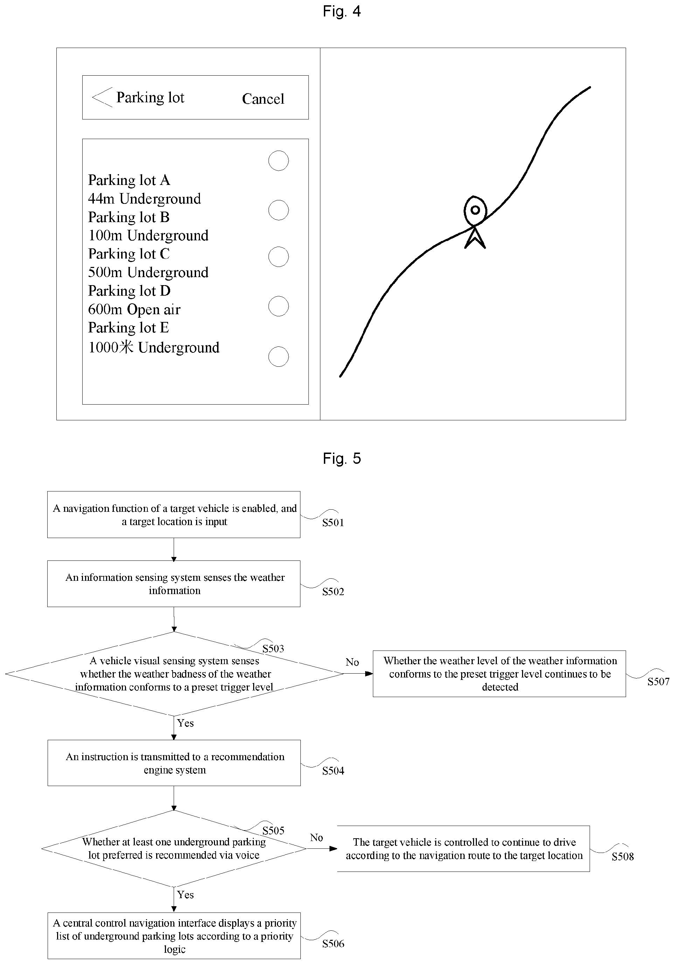

Fig. 4 is a schematic diagram of an interface of pushing parking lots according to an embodiment of the present disclosure. As shown in Fig. 4, parking lot A is an underground parking lot that is 44 meters away from the target vehicle. Parking lot B is an underground parking lot that is 100 meters away from the target vehicle. Parking lot C is an underground parking lot that is 500 meters away from the target vehicle. Parking lot D is an open-air parking lot that is 600 meters away from the target vehicle. And parking lot E is an underground parking lot that is 1000 meters away from the target vehicle. Parking lot A, parking lot B, parking lot C, parking lot D, and parking lot E are sorted according to the priorities.

In this embodiment, in an original parking lot recommendation priority list (considering distance between the user and the parking lots), a priority of sorting of underground parking lots within 500 meters is better than that of open-air parking lots such as overground parking lots and roadside parking lots within 500 meters. In the same way, although the priority of the underground parking lots beyond 500 meters is lower than that of the open-air parking lot within 500 meters, it is still higher than that of the open-air parking lots beyond 500 meters.

As an optional example, it is assumed that the target location is within 500 meters. When other push conditions are the same, the push priority of the underground parking lots is higher than that of the overground parking lots and the roadside parking lots. The target location can also be set at other distances beyond 500 meters.

At step S308, the target vehicle is controlled to continue to drive according to the navigation route to the target location.

In response to the target vehicle having not reached the target location, the target vehicle is controlled to continue to drive according to the navigation route to the target location.

At step S309, whether the weather level of the weather information conforms to the preset trigger level continues to be detected.

In response to the vehicle visual sensing system sensing the weather level of the weather information does not conform to the preset trigger level, whether the weather level of the weather information conforms to the preset trigger level continues to be detected.

At step S310, a priority list of the underground parking lots without the weather information is displayed on the central control navigation interface.

In response to the voice recommends that an underground parking lot is not preferred, the priority list of the underground parking lots without the weather information is displayed on the central control navigation interface, and parking slots can be pushed and selected according to the original priority push logic (generally, parking lots having short distances and less time to arrive at are preferred). The parking lots pushed according to the original priority push logic may be preferably those parking lots that have the shortest distances from the target vehicle and at which the target vehicle takes least time to arrive at, and are finally displayed on the map navigation interface according to the priorities from high to low, so that the user can make a quick decision.

The method for actively recommending a suitable parking lot for the target vehicle in emergency under an extremely bad weather in this embodiment is described below.

Fig. 5 is a flow chart of a method for actively recommending a proper parking lot in a navigation process of the vehicle according to an embodiment of the present disclosure. As shown in Fig. 5, the method may include the following steps.

At step S501, a navigation function of a target vehicle is enabled, and a target location is input.

At step S502, an information sensing system senses the weather information.

In this embodiment, in response to the target vehicle being in the navigation process, the weather information may be sensed through the information sensing system.

At step S503, a vehicle visual sensing system senses whether the weather badness of the weather information conforms to a preset trigger level.

In this embodiment, the preset trigger level is used for determining a trigger condition, which may be a rainfall level, a dust level, and the like.

It is defined that in an extremely bad weather, when rainfall, dust, hail, wind level, and the like reach a certain level, there may be potential security risk for the user, and it is not suitable for parking vehicles in open places. The preset trigger level of this embodiment can be used for indicating the above-mentioned extremely bad weather.

In this embodiment, the vehicle visual sensing system and the image recognition technology can be used for acquiring the current position and then detecting the weather condition of the current position. The weather badness level can be determined according to a value of a preset weather badness parameter in the weather condition to determine whether the weather badness level conforms to the preset trigger level.

At step S504, an instruction is transmitted to a recommendation engine system.

In response to the vehicle visual sensing system sensing the weather level of the weather information conforms to the preset trigger level (extremely bad weather), the instruction is transmitted to the recommendation engine system.

At step S505, whether at least one underground parking lot preferred is recommended via voice.

In response to a recommendation engine actively initiating voice recommendation, the user can be asked whether the at least one underground parking is preferred.

At step S506, a central control navigation interface displays a priority list of underground parking lots according to a priority logic.

The voice recommends that an underground parking lot is preferred, and the central control navigation interface displays the priority list of the underground parking lots according to the priority logic, and only information of underground parking lots may be displayed.

Optionally, in this embodiment, the information of multiple parking lots can be displayed on a map navigation interface in an order of the priorities from high to low according to the original recommendation logic, so that the user can make a quick decision.

At step S507, whether the weather level of the weather information conforms to the preset trigger level continues to be detected.

In response to the vehicle visual sensing system sensing the weather level of the weather information does not conform to the preset trigger level, whether the weather level of the weather information conforms to the preset trigger level continues to be detected.

At step S508, the target vehicle is controlled to continue to drive according to the navigation route to the target location.

The recommendation engine does not actively initiate a voice recommendation, and the target vehicle can be controlled to continue to drive according to the navigation route to the target location.

In this embodiment, while the parking lot information is pushed, an actual driving scenario of the user and the weather conditions can be considered, which enriches the influencing factors on pushing of the parking lot information, so that information of the parking lot pushed meets an actual need of the user. At the same time, in this embodiment, the cognitive and operational burdens of the user is reduced through active recommendation and voice interaction, which is more thoughtful and efficient. and the use experience of navigation of the user is enhanced. For products, it can change from passive to active. The user can perceive and experience good and desired functions in an active manner, instead of exploring them actively, so that the technical effect of improving the efficiency of navigating a parking area for a vehicle is achieved, and the technical problem of low efficiency of navigating a parking area for a vehicle is solved.

An embodiment of the present disclosure further provides an apparatus for navigating a vehicle. For example, it should be noted that the apparatus for navigating a vehicle in this embodiment may be configured to implement the method for navigating a vehicle according to the embodiment of the present disclosure.

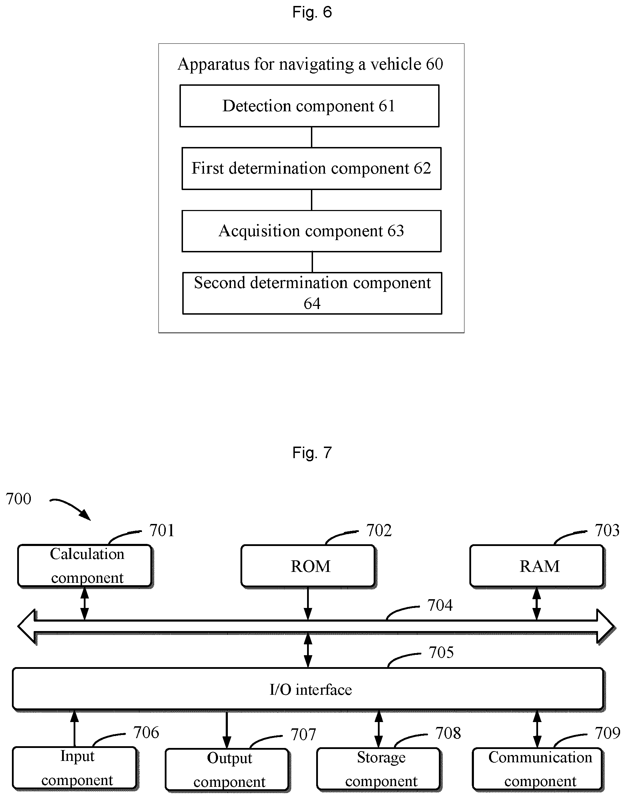

Fig. 6 is a schematic diagram of an apparatus for navigating a vehicle according to an embodiment of the present disclosure. As shown in Fig. 6, the apparatus 60 for navigating a vehicle may include a detection component 61, a first determination component 62, an acquisition component 63, and a second determination component 64.

The detection component 61 is configured to, in response to a target vehicle being driving to a target location, detect weather information of an environment where the target vehicle is located.

The first determination component 62 is configured to determine, on the basis of the weather information, wherein a weather level of the environment, wherein the weather level is used for indicating a weather badness of the environment where the target vehicle is located.

The acquisition component 63 is configured to acquire at least one candidate parking area, in response to the weather level being higher than a target weather level, wherein the at least one candidate parking area matches with the target weather level, and each of the at least one candidate parking area is used for indicating an area where the target vehicle is allowed to be parked.

The second determination component 64 is configured to determine a target parking area from the at least one candidate parking area, and determine, on the basis of the target parking area, a navigation route of the target vehicle.

Optionally, the apparatus further includes an output component, configured to output voice prompt information, in response to the weather level being higher than the target weather level, wherein the voice prompt information is used for prompting whether the at least one candidate parking area is allowed to be pushed.

Optionally, the acquisition component 63 includes a first acquisition module, configured to acquire the at least one candidate parking area according to a target priority, in response to the at least one candidate parking area being allowed to be pushed, wherein a degree to which the candidate parking area with q high target priority suitable for parking the target vehicle is greater than a degree to which the candidate parking area with a low target priority suitable for parking the target vehicle.

Optionally, in the at least one candidate parking area, the target priority of the underground candidate parking area is higher than that the target priority of the candidate parking area overground.

Optionally, the apparatus further includes a third determination component, configured to determine a current driving state of the target vehicle; and a fourth determination component, configured to determine a target weather level corresponding to the current driving state.

Optionally, the third determination component includes a first determination module, configured to determine a first driving state of the target vehicle, wherein the first driving state is used for indicating that the target vehicle has driven to a preset distance range from the target location; and the fourth determination component includes a second determination module, configured to determine a first target weather level matching with the first driving state, the first target weather level being used for indicating a first weather badness.

Optionally, the detection component 61 includes a detection module, configured to detect the weather information after the first driving state is determined.

Optionally, the third determination component includes a third determination module, configured to determine a second driving state of the target vehicle, wherein the second driving state being used for indicating that the target vehicle has not driven to the preset distance range from the target location; and the fourth determination component includes a fourth determination module, configured to determine a second target weather level matching with the second driving state, wherein the second target weather level is used for indicating second weather badness.

Optionally, the detection component 61 includes a second acquisition module, configured to detect, after the target location is acquired, the weather information in response to the target vehicle being in the second driving state.

In the apparatus for navigating a vehicle in this embodiment, in response to the target vehicle being driving to the target location, the at least one candidate parking area for the target weather level may be acquired on the basis of the detected weather level reaching the target weather level, and the target area is selected from the at least one candidate parking area to determine the navigation route of the target vehicle, so that the target area may be navigated according to the navigation route, which ensures that an appropriate target area can be conveniently selected for the target vehicle when the weather level reaches the target weather level, and the safety, comfort and hygiene of the parking of the target vehicle is ensured, the technical effect of improving the efficiency of navigating the parking area of the vehicle is achieved, and the technical problem of low efficiency of navigating the parking area of the vehicle is solved.

In the technical solutions of the present disclosure, the acquisition, storage, application, and the like of the user's personal information involved are all in compliance with the provisions of relevant laws and regulations, and do not violate public order and good customs.

According to embodiments of the present disclosure, the present disclosure further provides an electronic device, a readable storage medium, and a computer program product.

Fig. 7 is a schematic block diagram of an electronic device according to an embodiment of the present disclosure. The electronic device is intended to represent various forms of digital computers, such as at least one laptop computer, at least one desktop computer, at least one workstation, at least one personal digital assistant, at least one server, at least one blade server, at least one mainframe computer, and other suitable computers. The electronic device may also represent various forms of mobile devices, such as at least one personal digital processing, at least one cellular phone, at least one smart phone, at least one wearable device, and other similar computing apparatuses. The components, connections and relationships therebetween, and functions thereof illustrated herein are by way of examples only, and are not intended to limit the implementation of the present disclosure described and/or required herein.

As shown in Fig. 7, the device 700 includes a calculation component 701, which may perform various suitable actions and processes according to computer program stored in a read only memory (ROM) 702 or a computer program loaded into a random access memory (RAM) 803 from a storage component 708. In the RAM 703, various programs and data required for operation of the device 700 are also stored. The calculation component 701, the ROM 702, and the RAM 703 are connected to one another by means of a bus 704. An input/output (I/O) interface 705 is also connected to the bus 704.

A number of components in the device 700 are connected to the I/O interface 705, including: an input component 706, such as a keyboard and a mouse, etc.; an output component 707 such as various types of displays, speakers, etc.; a storage component 808 such as a magnetic disk, an optical disk, etc.; and a communication component 709, such as a network card, a modem, and a wireless communication transceiver. The communication component 709 allows the device 700 to exchange information/data with other devices via a computer network such as the Internet and/or various telecommunication networks.

The calculation component 701 may be a variety of general-purpose and/or special-purpose processing assemblies having processing and calculation capabilities. Some examples of the calculation component 701 include, but are not limited to, a central processing unit (CPU), a graphics processing unit (GPU), a variety of special-purpose artificial intelligence (AI) computing chips, a variety of calculation components running machine learning model algorithms, a digital signal processing (DSP), and any suitable processor, controller, microcontroller, etc. The calculation component 701 executes the various methods and processes as described above, for example, the method for navigating a vehicle. For example, in some embodiments, the method for navigating a vehicle may be implemented as a computer software program, which is tangibly contained in a machine-readable medium, such as the storage component 708. In some embodiments, part or all of the computer programs may be loaded and/or installed on the device 700 via the ROM 702 and/or the communication component 709. In response to the computer program is loaded to the RAM 703 and executed by the calculation component 701, at least one step of the method for navigating a vehicle described above can be executed. Alternatively, in other embodiments, the calculation component 701 may be configured to perform the method for navigating a vehicle in any other suitable manner (for example, by means of firmware).

An embodiment of the present invention further provides a vehicle which may include the apparatus for navigating a vehicle according to the embodiment of the present invention, or the electronic device according to the embodiment of the present invention.

Various embodiments of the systems and techniques described above herein may be implemented in a digital electronic circuit system, an integrated circuit system, a field programmable gate arrays (FPGA), an application specific integrated circuit (ASIC), an application-specific standard product (ASSP), a system-on-chip (SOC), a complex programmable logic device (CPLD), computer hardware, firmware, software, and/or their combination. These various embodiments may include: implementations in at least one computer programs, wherein the at least one computer program may be executed and/or interpreted on a programmable system including at least one programmable processor. The programmable processor may be a special-purpose or general-purpose programmable processor, may receive data and instructions from a storage system, at least one input apparatus, and at least one output apparatus, and transmit the data and instructions to the storage system, the at least one input apparatus, and the at least one output apparatus.

Program codes for implementing the methods of the present disclosure can be written in any combination of at least one programming languages. These program codes can be provided to a processor or controller of a general-purpose computer, a special-purpose computer, or other programmable data processing apparatuses, such that the program codes, when executed by the processor or controller, cause the functions/operations specified in the flowcharts and/or block diagram to be executed. The program codes may be entirely executed on a machine and partly executed on a machine, , and as a standalone software package, partly executed on a machine and partly executed on a remote machine, or entirely executed on a remote machine or server.

In the context of the present disclosure, a machine-readable medium may be tangible medium, which may contain or store at least one program for using by an instruction execution system, apparatus or device, or for use in combination with the instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combinations of the described content. More specific examples of machine-readable storage medium would include electrical connection based on at least one wires, a portable computer disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combinations of the described content.

To provide interaction with a user, the systems and techniques described herein may be implemented on a computer having: a display apparatus (e.g. CRT (cathode ray tube) or LCD (liquid crystal display) monitor) for displaying information to the user; and a keyboard and a pointing apparatus (e.g. mouse or trackball) by which the user can provide an input to the computer. Other kinds of apparatuses may also be used to provide interaction with the user; for example, feedback provided to the user can be any form of sensing feedback (e.g. visual feedback, auditory feedback or tactile feedback); and input from the user may be received in any form (including acoustic input, speech input or tactile input).

The systems and techniques described herein can be implemented in a computing system including a background component (for example, as a data server), or a computing system including a middleware component (for example, an application server), or a computing system including a front-end component (for example, a user computer with a graphical user interface or web browser through which the user may interact with embodiments of the systems and techniques described herein), or computing systems including any combination of such a background component, middleware component, or front-end component. The components of the system may be interconnected by any form or medium of digital data communication (for example, a communication network). Examples of the communication networks include: a local area network (LAN), a wide area network (WAN), and an Internet.

The computer system may include at least one client and at least one server. The at least one client and the at least one server are generally away from each other and typically interact via a communication network. A client-server relationship is generated by computer programs running on respective computers and having a client-server relationship to each other. The server may be a cloud server, may also be a server of a distributed system, or a server combined with a blockchain.

It should be understood that the steps may be reordered, added, or deleted by using the various forms of flows as shown above. For example, the steps disclosed in the present disclosure may be executed in parallel, may also be executed sequentially, and may also be executed in a different order, as long as desired results of the technical solutions disclosed in the present disclosure can be achieved, which are not limited herein.

The specific embodiments do not limit the scope of protection of the present disclosure. It will be apparent to a person skilled in the art that various modifications, combinations, sub-combinations, and replacements can be made according to design requirements and other factors. Any modifications, equivalent replacements, improvements, etc. made within the spirit and principle of the present disclosure shall belong to the scope of protection of the present disclosure.

## Claims

1. A method for navigating a vehicle, comprising:
in response to a target vehicle being driving to a target location, detecting (S102) weather information of an environment where the target vehicle is located;
determining (S104), on the basis of the weather information, a weather level of the environment, wherein the weather level is used for indicating a weather badness of the environment where the target vehicle is located;
in response to the weather level being higher than a target weather level, acquiring (S106) at least one candidate parking area, wherein the at least one candidate parking area matches with the target weather level, and each of the at least one candidate parking area is used for indicating an area where the target vehicle is allowed to be parked; and
determining (S108) a target parking area from the at least one candidate parking area, and determining, on the basis of the target parking area, a navigation route of the target vehicle.

2. The method as claimed in claim 1, wherein in response to the weather level being higher than the target weather level, the method further comprises:
outputting voice prompt information, wherein the voice prompt information is used for prompting whether the at least one candidate parking area is allowed to be pushed.

3. The method as claimed in claim 2, wherein acquiring the at least one candidate parking area comprises:
in response to the at least one candidate parking area being allowed to be pushed, acquiring the at least one candidate parking area according to a target priority, wherein a degree to which the candidate parking area with a high target priority suitable for parking the target vehicle is greater than a degree to which the candidate parking area with a low target priority suitable for parking the target vehicle.

4. The method as claimed in claim 3, wherein in the at least one candidate parking area, the target priority of the candidate parking area underground is higher than the target priority of the candidate parking area overground.

5. The method as claimed in claim 1, further comprising:
determining a current driving state of the target vehicle; and
determining the target weather level corresponding to the current driving state.

6. The method as claimed in claim 5, wherein determining the current driving state of the target vehicle comprises:
determining a first driving state of the target vehicle, wherein the first driving state is used for indicating that the target vehicle has driven to a preset distance range from the target location.

7. The method as claimed in claim 6, wherein determining the target weather level corresponding to the current driving state comprises:
determining a first target weather level matching with the first driving state, wherein the first target weather level is used for indicating a first weather badness.

8. The method as claimed in claim 6, wherein detecting the weather information of the environment where the target vehicle is located comprises:
in response to the target vehicle being in the first driving state, detecting the weather information.

9. The method as claimed in claim 5, wherein determining the current driving state of the target vehicle comprises: determining a second driving state of the target vehicle, wherein the second driving state is used for indicating that the target vehicle has not driven to a preset distance range from the target location; and
determining the target weather level corresponding to the current driving state comprises: determining a second target weather level matching with the second driving state, wherein the second target weather level is used for indicating second weather badness.

10. The method as claimed in claim 9, wherein detecting the weather information of the environment where the target vehicle is located comprises:
detecting the weather information in response to the target vehicle being in the second driving state.

11. An apparatus for navigating a vehicle (60), comprising:
a detection component (61), configured to, in response to a target vehicle being driving to a target location, detect weather information of an environment where the target vehicle is located;
a first determination component (62), configured to determine, on the basis of the weather information, a weather level of the environment, wherein the weather level is used for indicating a weather badness of the environment where the target vehicle is located;
an acquisition component (63), configured to acquire at least one candidate parking area, in response to the weather level being higher than a target weather level, wherein the at least one candidate parking area matches with the target weather level, and each of the at least one candidate parking area is used for indicating an area where the target vehicle is allowed to be parked; and
a second determination component (64), configured to determine a target parking area from the at least one candidate parking area, and determine, on the basis of the target parking area, a navigation route of the target vehicle.

12. An electronic device, comprising:
at least one processor; and
a memory in communication connection with the at least one processor, wherein
the memory stores an instruction capable of being executed by the at least one processor; and the instruction is executed by the at least one processor, so as to enable the at least one processor to implement the method according to execute the following steps any one of claims 1 to 10.

13. A non-statutory computer-readable storage medium storing a computer instruction, wherein the computer instruction is used for causing the computer to implement the method according to any one of claims 1 to 10.

14. A computer program product, comprising a computer program which, when executed by a processor, implements the method according to any one of claims 1 to 10.

15. A vehicle, comprising the apparatus for navigating a vehicle according to claim 11, or the electronic device according to claim 12.
